# EUROPEAN PATENT APPLICATION

(11) **EP 2 099 034 A1**
(43) Date of publication of application: **09.09.2009**
(21) Application number: 08380272.8
(22) Date of filing: 18.09.2008
(51) Int. Cl.: G21F 1/04, C04B 28/06

(54) **Heavy refractory mass for the execution of radioprotection and heat accumulation barriers**

(30) Priority: 06.03.2008 ES 200800665
(71) Applicant: Construcciones Tecnicas de Radioterapia, S.L., 45007 Toledo (ES)
(72) Inventor: Caruncho Rodado, Juan Manuel, 45007 Toledo (ES)
(74) Representative: Gonzalez Gomez, Maria Virtudes

(57) **Abstract**

The mass is structured on the basis of calcium aluminate cement, aggregates, water and chemical additives that modify the characteristics of the concrete. This mass uses magnetite, hematite or steel shot as an aggregate, with a highly continuous granulometry so as to achieve perfect consistency in the mass (Fuller's curve), accompanied by a high density, decisive factors for an optimum barrier effect against radiations. It can withstand high temperatures without there being any structural loss and it therefore maintains the barrier effect. The mass is suitable for producing poured concrete, concrete for bricks, and mortar, for use in the building of radioactive enclosures in which energies above 450 KeV, etc. are handled.

Furthermore, prefabricated blocks of mixed mass, one of high density with great heat accumulation capacity and the other with the opposite effect, i.e. of low capacity and low conductivity, enable the prefabricated blocks to emit the thermal energy from the same faces by which they absorb it.

## Description

### OBJECT OF THE INVENTION

The present invention refers to a heavy mass, specially designed to form a barrier with high radioprotection capability for energies above 450 KeV and with heat strength capabilities that exceed 1200°C without loss of structural capacities and maintaining the compactness of the mass.

A consequence obtained in the process of this invention is a product with a very high thermal capacity and conductivity.

The object of the invention is, on the one hand, is to provide a mass for the construction of armouring systems that will assure their structural stability in face of high temperatures and, on the other, the construction of modules or units with the capacity to accumulate thermal energy and direct its discharge.

### BACKGROUND OF THE INVENTION

Besides the normal components of cement, water and chemical additives which vary in accordance with the characteristics that we want for it, such as strength, setting time, anti-freeze protection, absence of cracking assurance, maritime environment, etc., concretes with radio-protection capability have an aggregate that differentiates them and which has to be heavy, i.e. of high specific density, and that the atomic structure of the main component of the aggregate should be effective to the atomic particles generated by the radioactive source to be confined or isolated.

In this respect, mainly natural aggregates are used with high iron content, as is the case of magnetite or hematite.

However, heavy masses of this type are usually obtained from Portland cement and this composition does not withstand high temperatures repeatedly and reiteratively, so that they end up cracking and crumbling and they lose their structural capacity and, therefore, their capability as an isolating barrier for radiation.

The applicant then has no knowledge of the existence of a heavy mass which forms a barrier with high capability radioprotection for energies above 450 KeV and with heat strength capabilities that exceed 1200°C with no loss of structural capabilities, besides maintaining the compactness of the mass, all this thanks to structuring that is described below.

### DESCRIPTION OF THE INVENTION

The heavy mass proposed by the invention resolves in a completely satisfactory way the above-mentioned problems, in the different aspects commented on.

To this end and starting from the above-mentioned composition for radioprotection concretes, in which iron-rich aggregates play a part, as is the case of magnetite or hematite, the mass of the invention focuses its characteristics on the fact of incorporating calcium aluminate cements, which enables them to exceed 1200°C without structural loss.

More specifically, in each granulometric fraction an attempt has been made to achieve a curve as similar as possible to FULLER's, so as to attain great compactness.

Optionally, metallic iron shot may be added additionally, in the event of being able to have a granulometric curve similar to the one mentioned. Otherwise, its use is not considered due to the decrease in consistency.

It is extremely important to attach importance to the granulometric curves in the format to be created so as to prevent the different expansions from generating sufficient stresses as to cause structural fractures.

The mass describes also possesses very important thermal parameters, as is the case of high calorific capacity and high thermal conductivity.

Although, as mentioned above, the main object of the invention is to obtain atomic armouring systems, the mass of the invention proves extremely useful in other applications, such as in the industrial area, heat accumulators for heating systems, ovens both in the field of not only professional or industrial but also craft ceramics, as well as those with a catering or food sector application due to the absence of toxicity of their components, and other similar applications.

As an optimisation of these functions, as regards achieving a block that will emit its accumulated thermal energy from the same face by which it is collected, the result has been successfully achieved that in the same mass one part has the function of heat storage, with the heavy metal described above, and in another part of the same block, the aggregate that composes this mass is a vitreous volcanic rock with very low conductivity, so its heat isolation effect is optimal, besides being "non-toxic" and chemically inert, while its isolation function can be implemented up to 1100°C without structural losses, this feature means that profitability and efficiency of the ovens or other elements manufactured with these systems are far superior to the present systems.

From the above situation responses have been obtained that mean that this high-density refractory mass, with densities of up to 4.15 Kg/dm³, has not only very high radioprotection capability, both in respect of gamma particles and neutrons, but also high calorific capacity and thermal conductivity.

Furthermore, it can be used for obtaining concrete masses executed with the same type of calcium aluminate based cement with the sole objective of controlling the discharge of the thermal energy absorbed and accumulated of a compact mass. In this preparation PERLITE has been used with two granulometric profiles, one of 0 to 1.5 mm and the other of 0 to 5 mm. Very low coefficients of thermal conductivity (λ) are obtained, in the range of 0.065 and 0.12 W/m°K, while with regard to its calorific capacity it is also very low, due to the way this aggregate is obtained, by means of thermal expansion, as it is a natural glass with 95% pores per volume. These two parameters make this material a suitable component for the application sought.

The process of making a compact mass which will offer the function of absorbing thermal energy, storing it and issuing it from the same surfaces by which it was absorbed is the delicate part, on the one hand because the mass that has to be obtained must be compact and structurally continuous and, on the other, we have to take into account the difference in density on the one hand between magnetite, hematite or steel above 4.7 Kg/dm³ and Perlite below 0.11 Kg/dm³ and, on the other, perhaps more delicate, the hardness of these aggregates, magnetite and/or hematite, compact minerals with hardnesses between 5.5 and 6.5 on the Mohs scale, in respect of another material, Perlite, which is a thermally expanded glass, wherein 95% of its volume is pores, so that its hardness versus fragility is very high. This makes the mixing process a very delicate task in order to prevent the fracturing of the aggregate.

This situation is resolved by paying special care to two very important aspects in production.

In the case of producing heavy masses, the heavy mass mix has to be prepared in such a way that the granulometric mix has to be appropriate, as similar as possible to Fuller's curve, with a low A/C ratio, generating a rather dry mass and, above all, by carrying out an external vibrating of very high frequency.

When the intention is to produce light masses, the light mass mix has to be prepared in such a way that the perlite aggregate is poured slowly over a calcium aluminate cement, water and aerating agent mix, with an A/C ratio ≈ 0.85. This mass has to be stirred slowly until it is homogenized, while maintaining the best possible physical integrity of the aggregate. It is not recommended to carry out vibrating at all and, if done, it should be light or very low frequency and never internal by means of a vibrating needle. Vibro-compression should never be used.

Lastly, there is a possibility of obtaining a juxtaposition of the two masses (heavy and light), in which case the light mass should be poured over the previous heavy mix and short, low-frequency external vibrating carried out, but without making use of vibro-compression.

### DESCRIPTION OF THE DRAWINGS

To supplement the description that is being given and in order to assist in a clearer understanding of the features of the invention, in accordance with a preferred practical embodiment of same, a set of drawings is adjoined as an integral part of said description, wherein there is represented on an informative and non-restrictive basis the following:

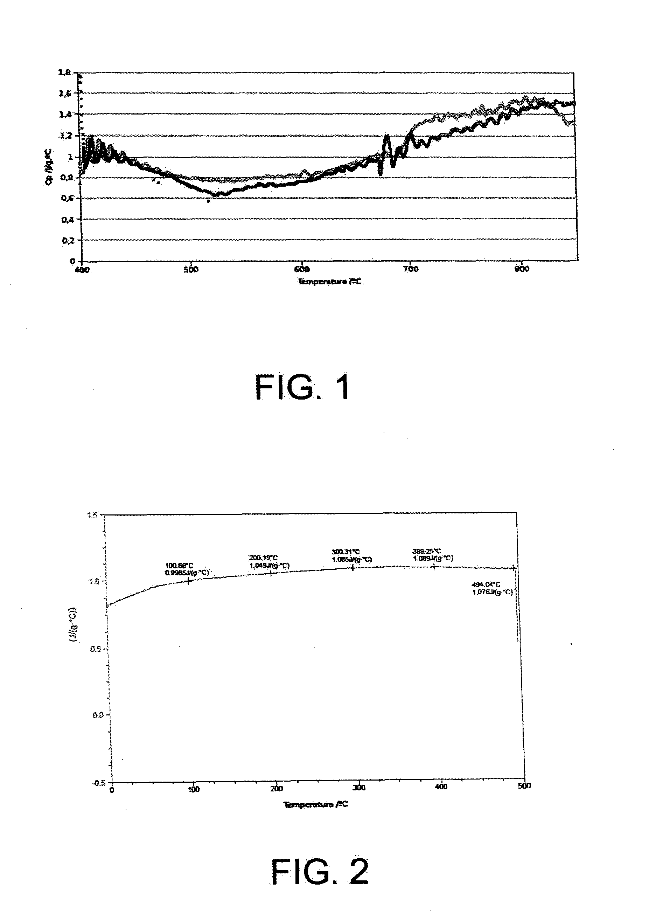

Figures 1 and 2.- They show respective graphs representing the calorific capacities of various samples of heavy mass prepared in accordance with the object of the present invention.

### PREFERRED EMBODIMENT OF THE INVENTION

Only calcium aluminate based cements should be used for these refractory masses, both the high density and the light one.

For high-density masses:
- Depending on the presentation and/or form of use or final presentation, different granulometries will be used with a proportion of dense aggregate between 70 - 80% of the total volume of the mix, and with a maximum grain size of between half and a third of the smallest dimensional value of the prefabricated block.
- The granulometric curve should be as close as possible to Fuller's curve in the working range as required by the end application.
- The amount of calcium aluminate cement should be between 320 - 420 Kg./m³ of total heavy mass and an A/C ratio of between 0.28 - 0.45 in accordance with the end application.
- Water-reducing plastifier additives that act as deflocculants for cements of this type based on polyethylene glycol derivatives or the like should be used in accordance with the end application.
- This mass has to be vibrated at high frequency in order to prevent the displacement of the coarse aggregate, in short fractions of time and as many as may be required by the thickness of the end application.
For low-density masses:
- The perlite aggregate, which should represent between 70 - 80% of the total volume of the mix, is poured slowly over a calcium aluminate cement, water and aerating agent mix in a suitable proportion, depending on the type being used, with an A/C ratio ≈ 0.85. This mass has to be stirred slowly until fully homogenized, maintaining the physical integrity of the aggregate as far as possible. No vibrating should be carried out at all and, if done, it should be light and low or very low frequency, and never internal by means of a vibrating needle. Vibro-compression should not be used.
Juxtaposition of the two masses (heavy and light).
- The light mass is poured over the previous heavy mix and very low frequency short external vibrating is carried out.
- Vibrating effect only, not vibro-compression.

If the mass is intended for producing poured concretes, we may underline the following recommendations concerning granulometries:
- Granulometry: 0-22 (recommendable for walls with a thickness of more than 10 cm; for lesser thicknesses, the maximum size of the aggregate should decrease proportionally down to the recommendation of the prefabricated blocks).
- Special care has to be taken in the study of poured concretes due to the risk of "aluminosis".
- Light high-frequency vibrating.

In the case of prefabricated blocks.
- Granulometry: as similar as possible to Fuller's curve. With the limitation that the upper limit of the curve should be less than half the smallest dimensional value of the prefabricated block.
- High-frequency vibrating. Vibro-compression is recommended.

While in the case of producing mortars:
- Granulometry: 0 - 1.8 mm.
- The aggregate may be prepared for its application by means of a spraying system, although it is advisable to reduce the maximum grain size of the aggregate to 1.2 or 1.3 mm and include a suitable gunniting additive.

Lastly, and by way of example, the graph in figure 1 sows the calorific capacities of two heavy mass samples using calcium aluminate based cements, a graph in which it may be observed how we obtain high calorific capacities, above 650° C, with values of more than 1 J/g.°C , reaching values of up to 1.6 J/g.°C.

As regards the graph in figure 2, we may also observe in it that with a different batching of the same components we obtain values of more than 1 J/g.°C in temperature values below 600°C and practically constant as of 100° C, in both cases obtaining very high coefficients of thermal conductivity, with very high λ values, between 10 and 15 W/(m*K).

## Claims

1. Heavy mass for the manufacture of products with high radio-protection and thermal accumulation capability, such as closure walls for radioactive enclosures, containers and the like, in the form of poured concrete, bricks, tiles or dry mortar of the type that incorporate cement, aggregates, water and chemical additives that vary in accordance with the characteristics that may be required for this mass, such as strength, setting time, anti-freeze protection and others, is **characterised in that** the cement that takes part in it is calcium aluminate based cement, while it is also envisaged that magnetite, hematite or other iron-rich minerals should play a part in it as well as, optionally, steel shot, in order to increase the general density of the mass, A very continuous granulometry is planned for these aggregates, as close as possible to Fuller's curve, with a view to obtaining optimal consistency in the mass.

2. Heavy mass for the manufacture of products with high radio-protection and thermal accumulation capability, according to claim 1, **characterised in that** when same is intended for producing high-density masses, different granulometries are used in it, with a proportion of the dense aggregate of between 70 - 80% of the total volume of the mix, and with a maximum grain size of between half and a third of the smallest dimensional value of the prefabricated block, such that the granulometric curve should be as close as possible to Fuller's curve in the working range as indicated by the end application, and the amount of calcium aluminate cement shall lie between 320 - 420 Kg./m³ of the total heavy mass total and an A/C ratio of between 0.28 - 0.45 in accordance with the end application.

3. Heavy mass for the manufacture of products with high radio-protection and thermal accumulation capability, according to claims 1 and 2,
**characterised in that,** depending on the end application, the mass includes water-reducing plastifier additives which act as deflocculants for cements of this type based on polyethylene glycol derivative, or the like.

4. Heavy mass for the manufacture of products with high radio-protection and thermal accumulation capability, according to claim 1, **characterised in that** same is intended for the production of low-density masses, a calcium aluminate cement, water and aerating agent participates in it in a suitable proportion, depending on the type of this being used, with an A/C ratio ≈ 0.85 on which perlite aggregate is added so that it comprises 70 - 80% of the total volume of the mix.

5. Heavy mass for the manufacture of products with high radio-protection and thermal accumulation capability, according to claims 3 and 4, **characterised in that** it is obtained by means of the juxtaposition of the heavy and light masses of the foregoing claims 3 and 4.

6. Heavy mass for the manufacture of products with high radio-protection and thermal accumulation capability, according to claim 1, **characterised in that** if same is intended for the production of poured concretes for walls with a thickness of more than 10 centimetres, its grain size shall lie between 0 - 22 mm.

7. Heavy mass for the manufacture of products with high radio-protection and thermal accumulation capability, according to claim 1, **characterised in that** if same is intended for the production of prefabricated blocks, its grain size shall be as similar as possible to Fuller's curve, with the limitation that the upper limit of the curve must be less than half the smallest dimensional value of the prefabricated block.

8. Heavy mass for the manufacture of products with high radio-protection and thermal accumulation capability, according to claim 1, **characterised in that** if same is intended for the production of mortars, its granulometry shall lie between 0 - 1.8 mm, with a maximum aggregate grain size of 1.2 - 1.3 mm for spray mortars.
